# EUROPÄISCHE PATENTSCHRIFT

(11) **EP 3 372 458 B1**
(45) Veröffentlichungstag und Bekanntmachung des Hinweises auf die Patenterteilung: **12.05.2021**
(21) Anmeldenummer: 18160707.8
(22) Anmeldetag: 08.03.2018
(51) Int. Cl.: B60R 25/021

(54) **SPERRVORRICHTUNG**
LOCKING DEVICE
DISPOSITIF DE FERMETURE

(30) Priorität: 08.03.2017 DE 102017104795
(43) Veröffentlichungstag der Anmeldung: 12.09.2018
(73) Patentinhaber: HUF Hülsbeck & Fürst GmbH & Co. KG, 42551 Velbert (DE)
(72) Erfinder: Trischberger, Werner, 85229 Langenpettenbach/Markt Indersdorf (DE); Pieronczyk, Martin, 85221 Dachau (DE); Denzle, Michael, 86356 Neusäß (DE)
(74) Vertreter: Patentanwälte Bals & Vogel

(56) Entgegenhaltungen:
- EP-A1- 2 842 818
- EP-A1- 3 296 164
- EP-A2- 1 182 104
- EP-A2- 1 982 878
- EP-A2- 2 025 567

## Beschreibung

Die Erfindung betrifft eine Sperrvorrichtung zum Sperren eines funktionswesentlichen Bauteils eines Kraftfahrzeugs, bspw. einer Lenkspindel oder eines Ganghebels, nach dem Oberbegriff des unabhängigen Vorrichtungsanspruches, ein Federelement für eine Sperrvorrichtung nach dem Oberbegriff des unabhängigen Erzeugnisanspruches und ein Verfahren zum Montieren eines Federelementes an einer Sperrvorrichtung nach dem Oberbegriff des unabhängigen Verfahrensanspruches.

Sperrvorrichtungen für Kraftfahrzeuge sind grundsätzlich bekannt , z.B. aus EP2842818, und werden zum Sperren eines funktionswesentlichen Bauteils eines Kraftfahrzeugs, bspw. einer Lenkspindel, eingesetzt. Sperrvorrichtungen weisen meistens ein Führungsgehäuse auf, in welchem eine Führungsaufnahme für einen längsverschieblichen Sperrbolzen ausgebildet ist, in welcher der Sperrbolzen entlang einer Hubrichtung zwischen einer Verriegelungsposition zum Verriegeln des funktionswesentlichen Bauteils und einer Entriegelungsposition zum Freigeben des funktionswesentlichen Bauteils geführt wird. Dabei kann es vorkommen, dass der Sperrbolzen eine Beweglichkeit quer zur Hubrichtung im Führungsgehäuse aufweist. Insbesondere in der Entriegelungsposition des Sperrbolzens im Betrieb des Kraftfahrzeuges kann dies dazu führen, dass Vibrationen des Kraftfahrzeuges sich über das Führungsgehäuse auf den Sperrbolzen übertragen und dort zu Klappergeräuschen führen.

Es ist daher Aufgabe der vorliegenden Erfindung, eine Sperrvorrichtung der vorstehend genannten Art zu verbessern. Insbesondere ist es Aufgabe der Erfindung, eine Sperrvorrichtung zum Sperren eines funktionswesentlichen Bauteils eines Kraftfahrzeugs, bspw. einer Lenkspindel oder eines Ganghebels, bereitzustellen, die einfach aufgebaut ist, die leicht zu montieren ist, die zuverlässig, sicher und komfortabel im Betrieb ist und die eine reduzierte Geräuschkulisse im Betrieb aufweist.

Die vorliegende Aufgabe wird durch eine Sperrvorrichtung mit den Merkmalen des unabhängigen Vorrichtungsanspruchs, insbesondere aus dem kennzeichnenden Teil gelöst. Ferner wird die erfindungsgemäße Aufgabe durch ein Federelement für eine Sperrvorrichtung mit den Merkmalen des unabhängigen Erzeugnisanspruches, insbesondere aus dem kennzeichnenden Teil, gelöst. Ebenfalls wird zur Lösung der Aufgabe ein Verfahren zum Montieren eines Federelementes an einer Sperrvorrichtung mit den Merkmalen des unabhängigen Verfahrensanspruchs, insbesondere aus dem kennzeichnenden Teil, vorgeschlagen. In den abhängigen Vorrichtungs-, Erzeugnis und Verfahrensansprüchen sind bevorzugte Weiterbildungen der Erfindung aufgeführt. Merkmale, die zu den einzelnen Ausführungsformen der erfindungsgemäßen Sperrvorrichtung, des erfindungsgemäßen Federelementes und des erfindungsgemäßen Verfahrens offenbart werden, können in der Weise miteinander kombiniert werden, dass bezüglich der Offenbarung zu den Ausführungsformen der erfindungsgemäßen Sperrvorrichtung, des erfindungsgemäßen Federelementes und des erfindungsgemäßen Verfahrens stets wechselseitig Bezug genommen wird bzw. werden kann. Außerdem kann das erfindungsgemäße Verfahren zum Montieren des erfindungsgemäßen Federelementes an der erfindungsgemäßen Sperrvorrichtung durchgeführt werden.

Die Erfindung stelle eine Sperrvorrichtung zum Sperren eines funktionswesentlichen Bauteils eines Kraftfahrzeugs, insbesondere einer Lenkspindel, bereit, die mit einem Führungsgehäuse ausgeführt ist, in welchem eine Führungsaufnahme für einen Sperrbolzen ausgebildet ist, in welcher der Sperrbolzen beweglich entlang einer Hubrichtung zwischen einer Verriegelungsposition zum Verriegeln des funktionswesentlichen Bauteils und einer Entriegelungsposition zum Freigeben des funktionswesentlichen Bauteils aufgenommen ist. Zudem ist die Sperrvorrichtung mit einem Federelement zum Einbringen einer Haltekraft auf den Sperrbolzen zumindest in einer Richtung quer zur Hubrichtung ausgeführt. Hierzu ist es erfindungsgemäß vorgesehen, dass das Federelement einen Kontaktabschnitt aufweist, welcher in der Entriegelungsposition des Sperrbolzens einen Halteabschnitt des Sperrbolzens federelastisch kontaktiert, wodurch das Federelement die Haltekraft über den Sperrbolzen an einer Führungswandung in der Führungsaufnahme abstützt.

Unter einem funktionswesentlichen Bauteil eines Kraftfahrzeuges kann im Sinne der Erfindung eine Lenkspindel oder ein Ganghebel verstanden werden. Mit anderen Worten kann unter einem funktionswesentlichen Bauteil im Sinne der Erfindung ein funktionswesentlicher Bestandteil der Lenkung des Kraftfahrzeuges verstanden werden, der bewegt werden muss, damit das Kraftfahrzeug losfahren kann. Unter einem Federelement im Sinne der Erfindung kann ein Sicherungselement für den Sperrbolzen, bspw. mit einer integrierten Aufbruchsschutzfunktion, verstanden werden, welches zumindest in einer Position des Sperrbozens und/oder in zumindest einer Situation im Normalbetrieb und/oder im Notfallbetrieb der Sperrvorrichtung auf den Sperrbolzen einwirken kann, um den Sperrbolzen mit einer Federkraft zu beauflagen und ggf. zu arretieren.

Der Erfindungsgedanke liegt dabei darin, eine Federbelastung auf den Sperrbolzen zumindest quer zur Hubrichtung des Sperrbolzens im Führungsgehäuse und zumindest in der Entriegelungsposition des Sperrbolzens bereitzustellen, die die Beweglichkeit des Sperrbolzens quer zur Hubrichtung im Führungsgehäuse einschränkt und vorzugsweise vermeidet. Mithilfe des Federelementes kann der Sperrbolzen quer an eine zum Federelement gegenüberliegende Führungswandung in der Führungsaufnahme des Führungsgehäuses gedrückt werden. Somit kann ein unerwünschtes Klappern vermieden oder gar reduziert werden. Mit anderen Worten kann durch das Federelement eine Relativbewegung des Sperrbolzens zum Führungsgehäuse verhindert werden. Das erfindungsgemäße Federelement kann vorteilhafterweise als ein Dämpfer zum Abfangen und zum Reduzieren der Relativbewegungen zwischen dem Führungsgehäuse und dem Sperrbolzen ausgebildet sein. Das erfindungsgemäße Federelement kann mithilfe von federbelasteten Kugeln oder Stiften, oder mithilfe von aus einem Blech oder einem Draht ausgebildeten Federn mit einer entsprechenden Umlenkung, oder mithilfe von Spiralfedern oder mithilfe von Schenkelfedern umgesetzt werden. Vorteilhafterweise kann innerhalb des Sperrbolzens entlang der Hubrichtung eine Nut bzw. eine Freilaufnut vorgesehen sein, in welcher der Kontaktabschnitt des Federelementes in der Verriegelungsposition des Sperrbolzens frei beweglich sein kann. Erst, wenn sich der Sperrbolzen in die Entriegelungsposition bewegt, kann bspw. über einen Rampenabschnitt der Nut eine Kontaktierung des Halteabschnittes des Sperrbolzens mit dem korrespondierenden Kontaktabschnitt des Federelementes gewährleistet werden. Dadurch kann die Haltekraft des durch den Kontakt mit dem Sperrbolzen vorgespannten Federelementes in den Sperrbolzen eingebracht und über den Sperrbolzen an der Führungswandung in der Führungsaufnahme des Führungsgehäuses abgestützt werden. Zudem kann es vorteilhaft sein, wenn das Federelement zusätzlich zu einer quer zur Hubrichtung einwirkenden Haltekraft auch eine axiale Komponente der Haltekraft entlang der Hubrichtung in den Sperrbolzen einbringen kann, um eine Relativbewegung des Sperrbolzens zum Führungsgehäuse noch wirksamer und besser zu unterbinden und somit die Klappergeräusche zuverlässiger zu vermeiden. Somit wird eine verbesserte Sperrvorrichtung zum Sperren eines funktionswesentlichen Bauteils eines Kraftfahrzeugs, bspw. einer Lenkspindel oder eines Ganghebels, bereitgestellt, die einfach aufgebaut ist, die leicht zu montieren ist, die zuverlässig, sicher und komfortabel im Betrieb ist und die eine reduzierte Geräuschkulisse im Betrieb des Kraftfahrzeuges aufweist.

Ferner kann im Rahmen der Erfindung bei einer Sperrvorrichtung vorgesehen sein, dass am Sperrbolzen mindestens eine Nut ausgebildet sein kann, in welcher der Kontaktabschnitt des Federelementes zumindest zum Teil während einer Bewegung des Sperrbolzens zwischen der Verriegelungsposition und der Entriegelungsposition kontaktfrei zum Sperrbolzen führbar ist. Somit kann der Vorteil erreicht werden, dass der Kontaktabschnitt einen Freilauf in der Nut erfahren kann und einen Abstand zum Sperrbolzen zumindest zum Teil während seiner Bewegung zwischen der Verriegelungsposition und der Entriegelungsposition einhalten kann, um den Wechsel der Positionen durch den Sperrbolzen nicht zu beeinträchtigen. Spätestens in der Entriegelungsposition des Sperrbolzens kann der federelastische Kontakt zwischen dem Federelement und dem Sperrbolzen hergestellt werden, um Klappergeräusche in der Sperrvorrichtung während des Betriebes des Kraftfahrzeuges zu vermeiden, die durch den Sperrbolzen verursacht werden können, der mit einem gewissen Spiel in der Führungsaufnahme des Führungsgehäuses aufgenommen sein kann.

Weiterhin kann im Rahmen der Erfindung bei einer Sperrvorrichtung vorgesehen sein, dass zwischen der Nut und dem Halteabschnitt ein, vorzugsweise schräger, Rampenabschnitt am Sperrbolzen ausgebildet sein kann, um ein Überführen des Kontaktabschnittes des Federelementes aus der Nut auf den Halteabschnitt des Sperrbolzens zu unterstützen. Somit kann eine störungsfreie, geräusch- und reibungsarme Kontaktierung zwischen dem Federelement, insbesondere dem Kontaktabschnitt des Federelementes, und dem Sperrbolzen, insbesondere dem Halteabschnitt des Sperrbolzens, ermöglicht werden. Somit können außerdem ruckartige Bewegungen des Sperrbolzens und/oder des Federelementes relativ zueinander vermieden werden. Mithilfe des Rampenabschnittes kann ferner der Vorteil erreicht werden, dass der Kraftaufwand zum Überführen des Sperrbolzens aus der Verriegelungsposition in die Entriegelungsposition trotz einer Federbeaufschlagung geringgehalten werden kann.

Des Weiteren kann im Rahmen der Erfindung bei einer Sperrvorrichtung vorgesehen sein, dass am Federelement ein Aufbruchsschutzelement ausgebildet, bzw. dass das Federelement selbst als ein Aufbruchsschutzelement ausgeführt sein kann. Dabei ist es denkbar, dass das Federelement zwischen dem Führungsgehäuse für den Sperrbolzen und einem Gehäusedeckel vorgespannt in einer Betriebsstellung befestigt sein kann, in welcher das Aufbruchsschutzelement eine Bewegung des Sperrbolzens zulassen kann, und dass das Federelement in eine Arretierungsstellung überführbar sein kann, wenn der Gehäusedeckel in seiner Anordnung zum Führungsgehäuse verändert wird, in welcher das Aufbruchsschutzelement eine Bewegung des Sperrbolzens verhindern kann. Somit kann die Funktionalität des Federelementes erweitert werden. Neben einer Abfang- und Dämpfungsfunktion der Klappergeräusche durch den Sperrbolzen gegen das Führungsgehäuse kann das Federelement folglich eine weitere Funktion aufweisen und als ein Aufbruchsschutz dienen. Am Gehäusedeckel kann ein Schließzylinder zur Bewegung des Sperrbolzens im Führungsgehäuse angeordnet sein, welcher mit einem Schlüssel, vorzugsweise durch Drücken und/oder Drehen, betätigbar sein kann, um den Sperrbolzen auf eine berechtigte Weise in Bewegung zu versetzen. In diesem Fall ist die Sperrvorrichtung auch als rein mechanische Sperrvorrichtung, insbesondere rein mechanische Lenkradverrieglungsvorrichtung ausgestaltet, die auf einen motorischen Antrieb für den Sperrbolzen verzichtet. Zwischen dem Führungsgehäuse für den Sperrbolzen und dem Gehäusedeckel bildet sich eine Sollbruchstelle bzw. eine von außen zugängliche Stelle, die für unberechtigte Manipulationen von außen anfällig ist. Eine unberechtigte Person kann bspw. durch eine Stoßeinwirkung oder ein Schneidwerkzeug versuchen, den Gehäusedeckel abzunehmen, um sich einen Zugang zum Sperrbolzen in der Führungsaufnahme des Führungsgehäuses zu verschaffen. Bei geöffnetem Gehäusedeckel ist der Sperrbolzen unberechtigten Manipulationen ausgesetzt. Um dennoch einen Diebstahl des Kraftfahrzeuges wirksam zu vermeiden, kann das erfindungsgemäße Federelement mit dem Aufbruchsschutzelement dienen, welches durch das Abnehmen des Gehäusedeckels in seine Arretierungsstellung federelastisch befördert wird, in welcher das Aufbruchsschutzelement den Sperrbolzen arretiert. Somit kann eine Sperrvorrichtung bereitgestellt werden, die einfach mit nur wenigen Bauteilen aufgebaut ist und die über eine hohe Sicherheit und einen verbesserten Komfort im Normalbetrieb sowie über eine hohe Aufbruchssicherung in einem Notfallbetrieb des Kraftfahrzeuges verfügt.

Ebenfalls ist es im Rahmen der Erfindung denkbar, dass die erfindungsgemäße Sperrvorrichtung als elektrische Sperrvorrichtung mit einem elektrischen Antrieb für den Sperrbolzen, insbesondere als elektrische Lenkradverrieglungsvorrichtung, ausgestaltet ist. Damit kann die elektrische Sperrvorrichtung baulich getrennt von einem Schließzylinder oder einem elektrischen Startelement für diese Sperrvorrichtung, im Fahrzeug untergebracht werden.

Zudem kann die Erfindung bei einer Sperrvorrichtung vorsehen, dass das Federelement aus einem, vorzugsweise gebogenen, Federstahl, insbesondere Federblech, ausgebildet sein kann. Außerdem ist es möglich, dass das Federelement einen ersten Schenkel, an welchem der Kontaktabschnitt ausgebildet ist, und einen zweiten Schenkel aufweisen kann, an welchem ein Befestigungsabschnitt zum Befestigen des Federelementes am Führungsgehäuse und ggf. ein Aufbruchsschutzelement ausgebildet sein kann bzw. können. Ein solches Federelement ist einfach und günstig in der Herstellung und kann vorteilhafte federelastische Eigenschaften bereitstellen. Somit kann ein verbessertes Federelement ggf. mit erweiterten Funktionen bereitgestellt werden, welches zum Erzeugen der Haltekraft in der Entriegelungsstellung des Sperrbolzens und ggf. zum Erzeugen einer Arretierkraft bei einem Aufbruchsversuch der Sperrvorrichtung ausgebildet sein kann.

Ferner kann die Erfindung bei einer Sperrvorrichtung vorsehen, dass der Kontaktabschnitt in Form eines Druckstiftes oder einer Druckkugel ausgebildet sein kann, welcher oder welche mittels einer Druckfeder in die Richtung quer zur Hubrichtung des Sperrbolzens mit der Haltekraft beaufschlagt sein kann. Ein solches Federelement ist einfach herzustellen und zu montieren. Hierzu müsste im Führungsgehäuse lediglich eine Rundbohrung vorgesehen sein, in welcher der Kontaktabschnitt mit der Druckfeder eingesetzt wird. Weiterhin ist es möglich, dass das Federelement insbesondere einen hülsenartigen Befestigungsabschnitt für den Kontaktabschnitt und die Druckfeder aufweisen kann. Somit kann die Zusammensetzung des Federelementes und die Handhabung des fertigen Federelementes erleichtert werden. Dadurch kann außerdem die Montage des Federelementes am Führungsgehäuse vereinfacht werden.

Des Weiteren kann die Erfindung bei einer Sperrvorrichtung vorsehen, das Federelement in Form einer Schenkelfeder ausgebildet sein kann. Ferner ist es denkbar, dass das Federelement, insbesondere die Schenkelfeder, vorzugsweise ein erstes Schenkelende, an welchem der Kontaktabschnitt ausgebildet ist, und ein zweites Schenkelende aufweisen kann, welches federelastisch am Führungsgehäuse, vorzugsweise an einer Stütze im Führungsgehäuse, abgestützt sein kann. Ein solches Federelement ist ein günstiges und robustes Bauteil, welches wenig Platz erfordert, welches einstückig ausgebildet sein und welches leicht gehandhabt werden kann. Eine Schenkelfeder weist gute federelastische Eigenschaften auf und eignet sich auf eine vorteilhafte Weise zum Erzeugen der Haltekraft sowie zum Abfangen und Reduzieren von Schwingungen bzw. Relativbewegungen zwischen dem Sperrbolzen und dem Führungsgehäuse. Vorteilhafterweise kann zwischen dem ersten Schenkelende und dem zweiten Schenkelende ein Befestigungsabschnitt zum Befestigen des Federelementes am Führungsgehäuse ausgebildet sein. Somit kann das Federelement leicht am Führungsgehäuse montiert werden. Hierzu kann der Befestigungsabschnitt einfach über einen Befestigungspin am Führungsgehäuse geschoben werden.

Ferner kann im Rahmen der Erfindung bei einer Sperrvorrichtung vorgesehen sein, dass das erste Schenkelende und das zweite Schenkelende symmetrisch, vorzugsweise spiegelsymmetrisch, zueinander ausgebildet sein können. Somit kann die Herstellung des Federelementes einfach, günstig und mit wenig Aufwand ausgeführt werden. Weiterhin ist es möglich, dass das erste Schenkelende des Federelementes in Richtung zum zweiten Schenkelende abgewinkelt sein kann, um eine Haltekraft auf den Sperrbolzen in die Richtung quer zur Hubrichtung und entlang der Hubrichtung auszuüben. Durch eine solche einfache Maßnahme können die Relativbewegungen zwischen dem Sperrbolzen und dem Führungsgehäuse in unterschiedlichen Richtungen zuverlässig abgefangen werden. Somit kann ein wirksamer Geräusch-, Dämpfungs- und/oder Verschleißschutz in der Sperrvorrichtung, insbesondere zwischen dem Sperrbolzen und dem Führungsgehäuse, bereitgestellt werden.

Zudem kann die Erfindung bei einer Sperrvorrichtung vorsehen, dass am Führungsgehäuse eine Montageöffnung, bspw. in Form eines Montageschlitzes, für das Federelement ausgebildet sein kann, die außerhalb der Führungsaufnahme zugänglich sein kann. Dadurch kann eine einfache Montage des Federelementes am Führungsgehäuse ermöglicht werden. Die Montageöffnung kann dabei klein gehalten werden und sogar in vorhandenen Sperrvorrichtungen nachträglich eingesetzt werden. Somit können sogar herkömmliche Sperrvorrichtungen auf eine einfache und vorteilhafte Weise mit dem erfindungsgemäßen Federelement aufgerüstet werden. Zudem kann die Erfindung vorsehen, dass am Führungsgehäuse, insbesondere in der Montageöffnung, ein Befestigungspin für das Federelement, insbesondere für einen Befestigungsabschnitt des Federelementes, ausgebildet sein kann. Dadurch kann ermöglicht werden, dass das Federelement in einer Endmontagestellung einfach über dem Befestigungspin positioniert und somit zuverlässig am Führungsgehäuse befestigt werden kann.

Des Weiteren kann im Rahmen der Erfindung bei einer Sperrvorrichtung vorgesehen sein, dass am Führungsgehäuse, insbesondere an einem Befestigungspin des Führungsgehäuses, eine, vorzugsweise abgeschrägte, Montagefläche ausgebildet sein kann, um die Montage des Federelementes am Führungsgehäuse zu erleichtern. Somit kann die Montage des Federelementes am Führungsgehäuse kontrolliert ausgeführt werden und der Monteur eine haptische Rückmeldung über die Richtigkeit der Montage erfahren. Eine abgeschrägte Montagefläche reduziert den Kraftaufwand beim Montieren des Federelementes. Eine Endmontagestellung kann durch ein Vollenden der Montagebewegung erreicht werden, wenn das Federelement am Ende der Montagefläche über dem Befestigungspin in die Endmontagestellung gelangt, bspw. sprungartig einschnappt.

Ferner wird die erfindungsgemäße Aufgabe durch ein Federelement für eine Sperrvorrichtung zum Sperren eines funktionswesentlichen Bauteils eines Kraftfahrzeugs, bspw. einer Lenkspindel, gelöst, wobei die Sperrvorrichtung wie oben beschrieben ausgebildet sein kann, und wobei die Sperrvorrichtung ein Führungsgehäuse aufweist, in welchem eine Führungsaufnahme für einen Sperrbolzen ausgebildet ist, in welcher der Sperrbolzen beweglich entlang einer Hubrichtung zwischen einer Verriegelungsposition zum Verriegeln des funktionswesentlichen Bauteils und einer Entriegelungsposition zum Freigeben des funktionswesentlichen Bauteils aufgenommen ist. Das Federelement ist dabei zum Einbringen einer Haltekraft auf den Sperrbolzen zumindest in einer Richtung quer zur Hubrichtung ausgebildet. Hierzu ist es erfindungsgemäß vorgesehen, dass das Federelement einen Kontaktabschnitt, welcher in der Entriegelungsposition des Sperrbolzens an einem Halteabschnitt des Sperrbolzens federelastisch zur Auflage bringbar ist, wodurch das Federelement die Haltekraft über den Sperrbolzen an einer Führungswandung in der Führungsaufnahme abstützen kann, und einen Befestigungsabschnitt aufweist, welcher zum Befestigen des Federelementes am Führungsgehäuse ausgebildet ist. Dabei werden die gleichen Vorteile erreicht, die oben in Verbindung mit der erfindungsgemäßen Griffvorrichtung beschrieben wurden. Zur Vermeidung von Wiederholungen wird vorliegend vollumfänglich darauf Bezug genommen.

Weiterhin kann bei einem Federelement im Sinne der Erfindung vorgesehen sein, dass am Federelement ein Aufbruchsschutzelement ausgebildet sein kann. Somit kann ein Federelement verbesserter Funktionalität bereitgestellt werden. Gleichzeitig kann ein solches Federelement den Aufbau der Sperrvorrichtung vereinfachen und einfach an der Sperrvorrichtung montiert werden. Dabei ist es denkbar, dass das Federelement zwischen dem Führungsgehäuse für den Sperrbolzen und einem Gehäusedeckel in einer Betriebsstellung befestigt werden kann, in welcher das Aufbruchsschutzelement eine Bewegung des Sperrbolzens zulassen kann, wobei das Federelement in eine Arretierungsstellung überführbar sein kann, wenn der Gehäusedeckel in seiner Anordnung zum Führungsgehäuse verändert wird, in welcher das Aufbruchsschutzelement eine Bewegung des Sperrbolzens verhindern kann. Somit kann ein verbessertes Federelement bereitgestellt werden, welches für einen sicheren und komfortablen Normalbetrieb der Sperrvorrichtung sowie für einen zuverlässigen Aufbruchsschutz im Notfallbetrieb sorgen kann.

Des Weiteren ist es denkbar, dass das Federelement aus einem, vorzugsweise gebogenen, Federstahl, insbesondere Federblech, ausgebildet sein kann, wobei das Federelement insbesondere einen ersten Schenkel, an welchem der Kontaktabschnitt ausgebildet sein kann, und einen zweiten Schenkel aufweisen kann, an welchem der Befestigungsabschnitt und ggf. das Aufbruchsschutzelement ausgebildet sein kann bzw. können. Ein solches Federelement ist einfach und günstig in der Herstellung und kann mehrere funktionale Bereiche, wie bspw. einen Befestigungsabschnitt und ein Aufbruchsschutzelement, in einem einstückigen Element vereinen.

Zudem ist es möglich, dass der Kontaktabschnitt in Form eines Druckstiftes oder einer Druckkugel ausgebildet sein kann, welcher oder welche mittels einer Druckfeder in die Richtung quer zur Hubrichtung des Sperrbolzens mit der Haltekraft beaufschlagt sein kann, wobei das Federelement insbesondere einen hülsenartigen Befestigungsabschnitt für den Kontaktabschnitt und die Druckfeder aufweisen kann. Ein solches Federelement ist sehr einfach ausgebildet und kann mit wenig Aufwand in einer geeigneten Rundbohrung im Führungsgehäuse befestigt werden.

Außerdem kann im Rahmen der Erfindung bei einem Federelement vorgesehen sein, dass das Federelement in Form einer Schenkelfeder ausgebildet sein kann, wobei das Federelement, insbesondere die Schenkelfeder, vorzugsweise ein erstes Schenkelende, an welchem der Kontaktabschnitt ausgebildet ist, und ein zweites Schenkelende aufweisen kann, welches federelastisch am Führungsgehäuse, vorzugsweise an einer Stütze im Führungsgehäuse, abgestützt werden kann, wobei der Befestigungsabschnitt zwischen dem ersten Schenkelende und dem zweiten Schenkelende ausgebildet sein kann. Der Befestigungsbereich kann dabei gewunden ausgebildet sein und eine Anzahl an Windungen umfassen, die an die erforderliche Haltekraft und/oder an einen gewünschten Dämpfungseffekt angepasst werden kann. Ein solches Federelement erfordert außerdem wenig Stauraum und kann einfach und mit wenig Aufwand hergestellt und montiert werden.

Weiterhin ist es denkbar, dass das erste Schenkelende und das zweite Schenkelende symmetrisch, vorzugsweise spiegelsymmetrisch, zueinander ausgebildet sein können, wobei mindestens das erste Schenkelende des Federelementes insbesondere in Richtung zum zweiten Schenkelende abgewinkelt sein kann, um eine Haltekraft auf den Sperrbolzen in die Richtung quer zur Hubrichtung und entlang der Hubrichtung auszuüben. Somit kann ein günstiges und einfaches Federelement bereitgestellt werden. Ein abgewinkeltes Schenkelende des Federelementes kann vorzugsweise einen solchen Kontaktabschnitt zum Halteabschnitt des Sperrbolzens bilden, der Haltkräfte in unterschiedliche Richtungen in den Sperrbolzen einbringen kann und somit den Sperrbolzen zuverlässig vor Relativbewegungen zum Führungsgehäuse entlang und quer zur Hubrichtung schützen.

Ferner wird die erfindungsgemäße Aufgabe durch ein Verfahren zum Montieren eines Federelementes an einer Sperrvorrichtung zum Sperren eines funktionswesentlichen Bauteils eines Kraftfahrzeugs, bspw. einer Lenkspindel, gelöst, wobei die Sperrvorrichtung und das Federelement wie oben beschrieben ausgeführt sein können. Die Sperrvorrichtung kann ein Führungsgehäuse, in welchem eine Führungsaufnahme für einen Sperrbolzen ausgebildet ist, in welcher der Sperrbolzen beweglich entlang einer Hubrichtung zwischen einer Verriegelungsposition zum Verriegeln des funktionswesentlichen Bauteils und einer Entriegelungsposition zum Freigeben des funktionswesentlichen Bauteils aufgenommen ist, und ein Federelement zum Einbringen einer Haltekraft auf den Sperrbolzen zumindest in einer Richtung quer zur Hubrichtung aufweisen. Hierzu ist es erfindungsgemäß vorgesehen, dass Führungsgehäuse eine Montageöffnung zum Einsetzen des Federelementes aufweisen kann, die außerhalb der Führungsaufnahme zugänglich ist, wobei während eines Montagevorganges das Federelement in die Montageöffnung eingeschoben wird, bis das Federelement über einen Befestigungspin in der Montageöffnung greift, wodurch das Federelement eine Endmontagestellung erreicht. Dadurch kann eine einfache und schnelle Montage des Federelementes an der Sperrvorrichtung ermöglicht werden. Dabei werden die gleichen Vorteile erreicht, die oben in Verbindung mit der erfindungsgemäßen Sperrvorrichtung und dem erfindungsgemäßen Federelement beschrieben wurden. Zur Vermeidung von Wiederholungen wird vorliegend vollumfänglich darauf Bezug genommen. Weiterhin kann bei einem erfindungsgemäßen Verfahren vorgesehen sein, dass beim Überführen des Federelementes über den Befestigungspin das Federelement entlang einer, vorzugsweise abgeschrägten, Montagefläche geführt werden kann, die am Befestigungspin ausgebildet sein kann. Somit kann eine einfache, intuitive Montage des Federelementes mit einem geringen Kraftaufwand ermöglicht werden, bei der der Monteur haptische Rückmeldung über den Verlauf der Montage erhalten kann. Das Ende der Montagefläche und somit die Endmontagestellung des Federelementes kann vorteilhafterweise durch ein sprungartiges Einschnappen des Federelementes über dem Befestigungspin wahrgenommen werden.

Weitere Maßnahmen und Vorteile sowie technische Merkmale der Erfindung ergeben sich aus den Ansprüchen, der nachfolgenden Beschreibung und den Zeichnungen. Dabei können unterschiedliche Merkmale für sich alleine und in einer beliebigen Kombination vorteilhaft sein, ohne den Rahmen der Erfindung zu verlassen. In den nachstehenden Figuren ist die erfindungsgemäße Sperrvorrichtung in mehreren Ausführungsbeispielen detailliert dargestellt. Es zeigen:
- Fig. 1: eine Schnittansicht einer erfindungsgemäßen Sperrvorrichtung in einer Verriegelungsposition und in einer Entriegelungsposition des Sperrbolzens,
- Fig. 2: eine perspektivische Darstellung der erfindungsgemäßen Sperrvorrichtung gemäß der Figur 1,
- Fig. 3: unterschiedliche Seitenansichten der erfindungsgemäßen Sperrvorrichtung gemäß der Figur 1,
- Fig. 4: eine perspektivische Darstellung eines Sperrbolzens und eines Federelementes,
- Fig. 5: eine Schnittansicht einer erfindungsgemäßen Sperrvorrichtung gemäß einer weiteren Ausführungsform in einer Verriegelungsposition und in einer Entriegelungsposition des Sperrbolzens,
- Fig. 6a: eine Schnittansicht einer erfindungsgemäßen Sperrvorrichtung gemäß einer weiteren Ausführungsform in einer Verriegelungsposition des Sperrbolzens,
- Fig. 6b: eine Schnittansicht einer erfindungsgemäßen Sperrvorrichtung gemäß der Ausführungsform der Figur 6a in einer Entriegelungsposition des Sperrbolzens, und
- Fig. 7: eine Schnittansicht einer erfindungsgemäßen Sperrvorrichtung gemäß einer weiteren Ausführungsform in einer Verriegelungsposition und in einer Entriegelungsposition des Sperrbolzens.

In den nachfolgenden Figuren werden für die gleichen technischen Merkmale auch von unterschiedlichen Ausführungsbeispielen die identischen Bezugszeichen verwendet.

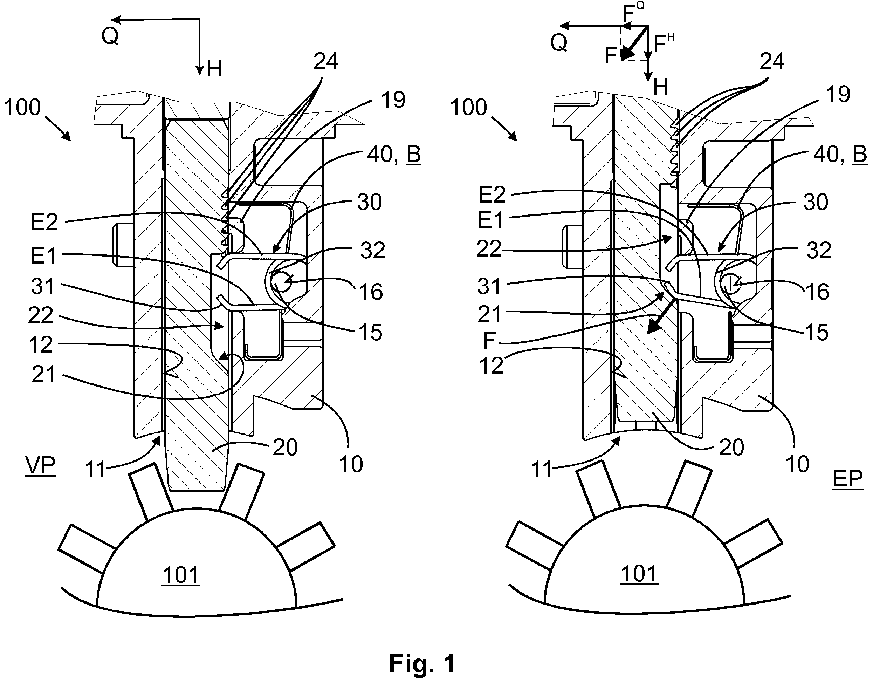

Die Figuren 1 bis 7 zeigen eine erfindungsgemäße Sperrvorrichtung 100 in einer Schnittdarstellung, die zum Sperren eines funktionswesentlichen Bauteils 101 eines Kraftfahrzeugs, bspw. einer Lenkspindel, ausgebildet ist. Außerdem wäre ein Ganghebel als ein mögliches funktionswesentliches Bauteil 101 des Kraftfahrzeugs im Sinne der Erfindung denkbar. Die Sperrvorrichtung 100 ist mit einem Führungsgehäuse 10 ausgeführt, in welchem eine Führungsaufnahme 11 für einen Sperrbolzen 20 ausgebildet ist, in welcher der Sperrbolzen 20 beweglich entlang einer Hubrichtung H zwischen einer Verriegelungsposition VP zum Verriegeln des funktionswesentlichen Bauteils 101 (links in der Figur 1) und einer Entriegelungsposition EP (rechts in der Figur 1) zum Freigeben des funktionswesentlichen Bauteils 101 aufgenommen ist. Zudem ist die Sperrvorrichtung 100 mit einem Federelement 30 zum Einbringen einer Haltekraft F auf den Sperrbolzen 20 zumindest in einer Richtung Q quer zur Hubrichtung H ausgeführt. Erfindungsgemäß weist das Federelement 30 einen Kontaktabschnitt 31 auf, welcher in der Entriegelungsposition EP des Sperrbolzens 20 einen Halteabschnitt 21 des Sperrbolzens 20 federelastisch kontaktiert, wodurch das Federelement 30 die Haltekraft F über den Sperrbolzen 20 an einer Führungswandung 12 in der Führungsaufnahme 11 abstützt.

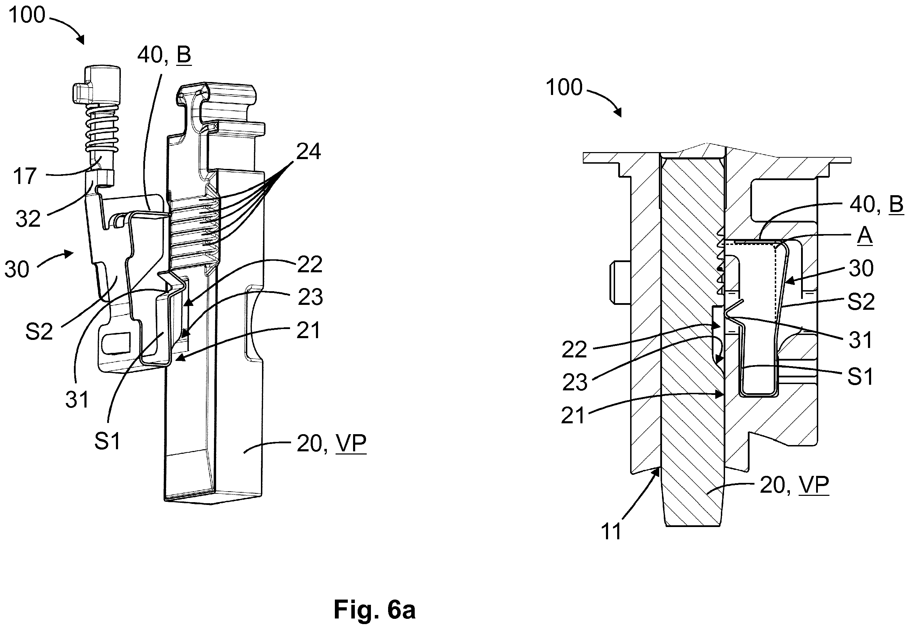

Das Federelement 30 im Sinne der Erfindung kann außerdem als ein Sicherungselement für den Sperrbolzen 20 bezeichnet werden, das ggf. eine integrierte Aufbruchsschutzfunktion aufweisen kann, die im Nachfolgenden anhand der Figur 6a erklärt wird, und das zumindest in einer Position EP, VP des Sperrbozens 20 und/oder in zumindest einer Situation im Normalbetrieb und/oder im Notfallbetrieb der Sperrvorrichtung 100 auf den Sperrbolzen 20 einwirken kann, um den Sperrbolzen 20 mit einer Federkraft F zu beauflagen und ggf. zu arretieren.

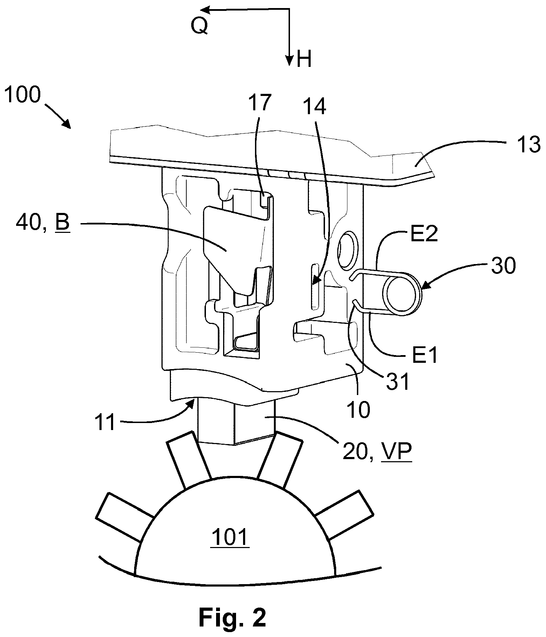

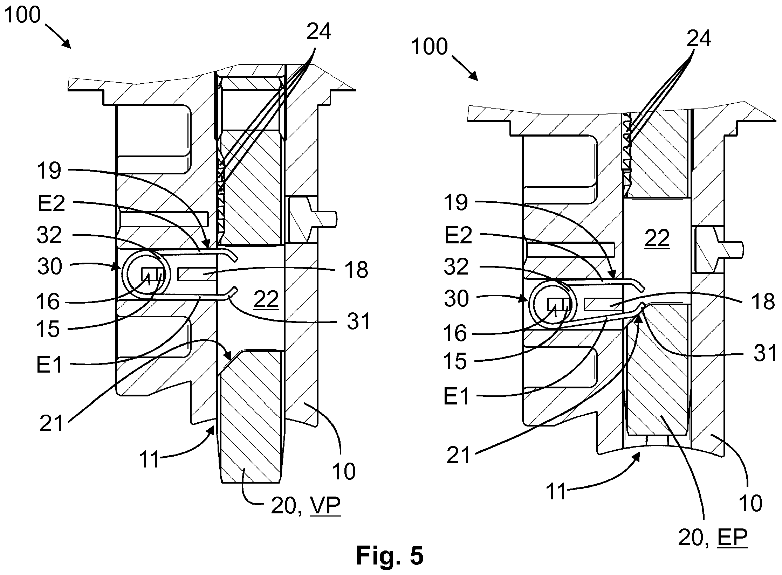

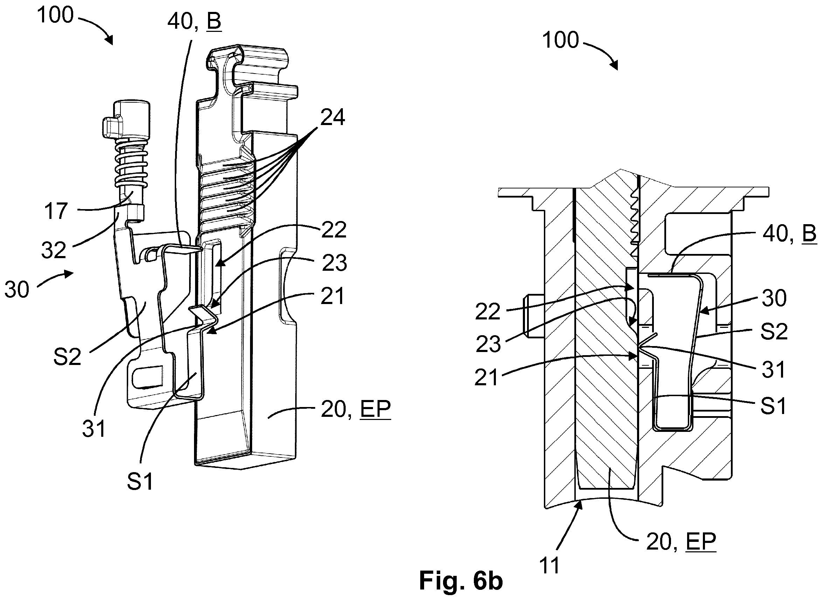

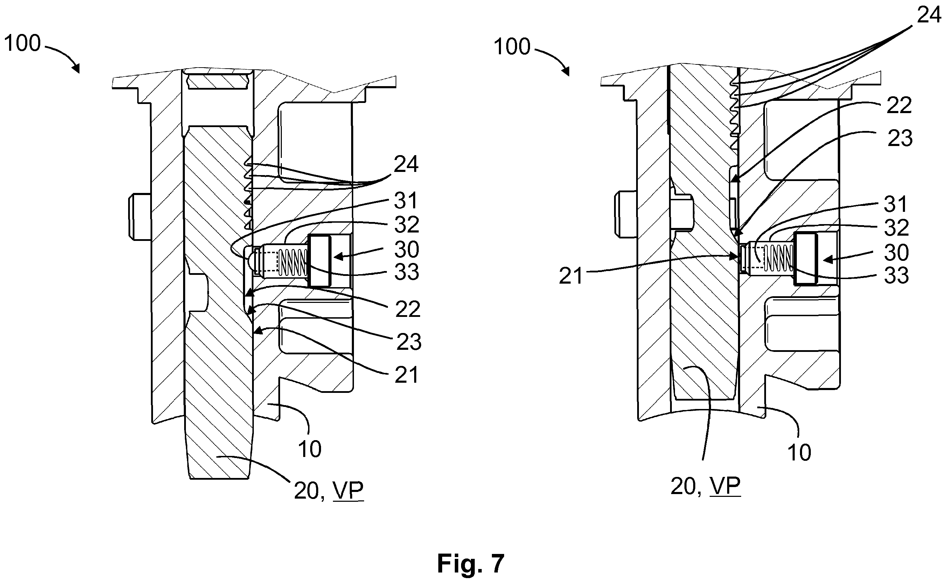

Das Federelement 30 bringt eine Federbelastung auf den Sperrbolzen 20 zumindest in der Entriegelungsposition EP des Sperrbolzens 20 ein, die die Beweglichkeit des Sperrbolzens 20 in die Richtung Q quer zur und ggf. entlang der Hubrichtung H im Führungsgehäuse 10 einschränkt und vorzugsweise vermeidet. Durch das Federelement 30 kann der Sperrbolzen 20 zumindest quer an eine zum Federelement 30 gegenüberliegende Führungswandung 12 in der Führungsaufnahme 11 des Führungsgehäuses 10 gedrückt werden, wodurch eine Relativbewegung des Sperrbolzens 20 zum Führungsgehäuse 10 verhindert und unangenehme Klappergeräusche reduziert bis gar vermieden werden. Das erfindungsgemäße Federelement 30 kann außerdem als ein Dämpfer wirken und die Relativbewegungen zwischen dem Führungsgehäuse 10 und dem Sperrbolzen 20 abfangen und dämpfen. Das erfindungsgemäße Federelement 30 kann auf unterschiedliche Art und Weise ausgebildet sein, wie es nachfolgend mithilfe der Figur 2 (Schenkelfeder und ein separates Aufbruchsschutzelement 40), der Figur 5 (Schenkelfeder), der Figur 6 (Federelement 30 mit einem integral ausgebildeten Aufbruchsschutzelement 40) und der Figur 7 (federbeaufschlagter Druckstift) gezeigt wird.

Wie die Figur 1 weiterhin zeigt, ist innerhalb des Sperrbolzens 20 entlang der Hubrichtung H eine Nut 22 bzw. eine Freilaufnut 22 vorgesehen, in welcher der Kontaktabschnitt 31 des Federelementes 30 in der Verriegelungsposition VP des Sperrbolzens 20 frei beweglich ist und kontaktfrei zum Sperrbolzen 20 gehalten wird. Erst, wenn sich der Sperrbolzen 20 in die Entriegelungsposition EP bewegt bzw. sich der Entriegelungsposition EP nähert, kann eine Kontaktierung des Halteabschnittes 21 des Sperrbolzens 20 mit dem korrespondierenden Kontaktabschnitt 31 des Federelementes 30 gewährleistet werden, bspw. über einen Rampenabschnitt 23 der Nut 22, der im Nachfolgenden in den Figuren 6a, 6b und 7 gezeigt ist, oder direkt an einem abgeschrägten Halteabschnitt 21 der Nut 22, der in den Figuren 1 bis 5 gezeigt ist. Dadurch kann die Haltekraft F des durch den federelastischen Kontakt mit dem Sperrbolzen 20 vorgespannten Federelementes 30 in den Sperrbolzen 20 eingebracht und über den Sperrbolzen 20 an der Führungswandung 12 in der Führungsaufnahme 11 des Führungsgehäuses 10 abgestützt werden. Vorteilhafterweise kann der Kontaktabschnitt 31 des Federelementes 30 derart abgewinkelt sein, dass das Federelement 30 zusätzlich zu einer Komponente F^{Q} der Haltekraft F, die in die Richtung Q quer zur Hubrichtung H auf den Sperrbolzen 20 einwirkenden kann, auch eine axiale Komponente F^{H} der Haltekraft F bereitstellen kann, die entlang der Hubrichtung H in den Sperrbolzen 20 eingebracht werden kann, um eine Relativbewegung des Sperrbolzens 20 relativ zum Führungsgehäuse 10 noch wirksamer und besser zu unterbinden und somit ein Entstehen von Klappergeräuschen zuverlässiger zu vermeiden.

In den Figuren 1 bis 4 ist ein erstes mögliches Ausführungsbeispiel des Federelementes 30 dargestellt, gemäß welchem das Federelement 30 in Form einer Schenkelfeder ausgebildet ist und neben dem Federelement 30 ein separates Ausbruchsschutzelement 40 vorgesehen sein kann. Das Federelement 30 in Form einer Schenkelfeder weist ein erstes Schenkelende E1, an welchem der Kontaktabschnitt 31 ausgebildet ist, und ein zweites Schenkelende E2 auf, welches federelastisch am Führungsgehäuse 10, vorzugsweise an einer Stütze 19 im Führungsgehäuse 10, abgestützt ist. Ein solches Federelement 30 stellt ein günstiges und robustes Bauteil dar, welches wenig Platz in Anspruch nehmen, welches einstückig ausgebildet sein und welches leicht gehandhabt werden kann. Eine Schenkelfeder weist gute federelastische Eigenschaften auf und eignet sich auf eine vorteilhafte Weise zum Erzeugen der Haltekraft F sowie zum Abfangen und Reduzieren von Schwingungen bzw. Relativbewegungen zwischen dem Sperrbolzen 20 und dem Führungsgehäuse 10. Zwischen dem ersten Schenkelende E1 und dem zweiten Schenkelende E2 ist ein Befestigungsabschnitt 32 zum Befestigen des Federelementes 30 am Führungsgehäuse 10, insbesondere an einem Befestigungspin 15 des Führungsgehäuses 10 ausgebildet. Der Befestigungsabschnitt 32 umfasst einen gewundenen Bereich der Schenkelfeder. Dabei ist es denkbar, dass die Anzahl an Windungen am Befestigungsabschnitt 32 an die erforderliche Haltekraft F bzw. an die Einbaubedingungen in der Führungsaufnahme 11 bzw. an das Spiel zwischen dem Sperrbolzen 20 und zumindest einer Führungswandung 12 der Führungsaufnahme 11 angepasst werden kann. Ein Federelement 30 mit mehr Windungen im zentralen Bereich kann bspw. höhere Kräfte erzeugen und/oder längere Relativbewegungen zwischen dem Sperrbolzen 20 und dem Führungsgehäuse 10 auffangen sowie mindern. Der zentrale gewundene Bereich dient außerdem zum Befestigen des Federelementes 30 am Befestigungspin 15 des Führungsgehäuses 10, wobei zum Befestigen des Federelementes 30 der Befestigungsabschnitt 32 einfach über den Befestigungspin 15 geschoben wird. Hierzu kann der Befestigungspin 15 eine vorzugsweise abgeschrägte Montagefläche 16 aufweisen, um die Montage des Federelementes 30 zu erleichtern. Somit kann das Federelement 30 einfach am Führungsgehäuse 10 montiert werden.

Wie in der Figur 2 weiterhin zu sehen ist, ist das erste Schenkelende E1 und das zweite Schenkelende E2 symmetrisch, vorzugsweise spiegelsymmetrisch, zueinander ausgebildet und endseitig in Richtung zueinander abgewinkelt. Ein solches Federelement 30 lässt sich einfach herstellen. Etwaige Toleranzen zwischen dem Federelement 30 und dem Sperrbolzen 20 können dadurch ausgeglichen werden. Zudem kann der abgewinkelte Kontaktabschnitt 31 am ersten Schenkelende E1 dafür sorgen, dass die Haltekraft F auf den Sperrbolzen 20 eine Komponente F^{Q} in die Richtung Q quer zur Hubrichtung H und eine Komponente F^{H} entlang der Hubrichtung H aufweisen kann, um die Relativbewegungen zwischen dem Sperrbolzen 20 und dem Führungsgehäuse 10 in unterschiedlichen Richtungen H, Q zu vermeiden. Somit kann ein wirksamer Geräusch-, Dämpfungs- und/oder Verschleißschutz für die Sperrvorrichtung 100 erreicht werden.

Wie die Figur 2 außerdem zeigt, ist am Führungsgehäuse 10 eine Montageöffnung 14 in Form eines Montageschlitzes für das Federelement 30 vorgesehen, die außerhalb der Führungsaufnahme 11 zugänglich ist und sogar nachträglich an herkömmlichen Führungsgehäusen 10 ausgebildet werden kann. Dadurch kann außerdem eine einfache Montage des Federelementes 30 am Führungsgehäuse 10 ermöglicht werden. Die Montageöffnung 14 kann dabei klein gehalten werden.

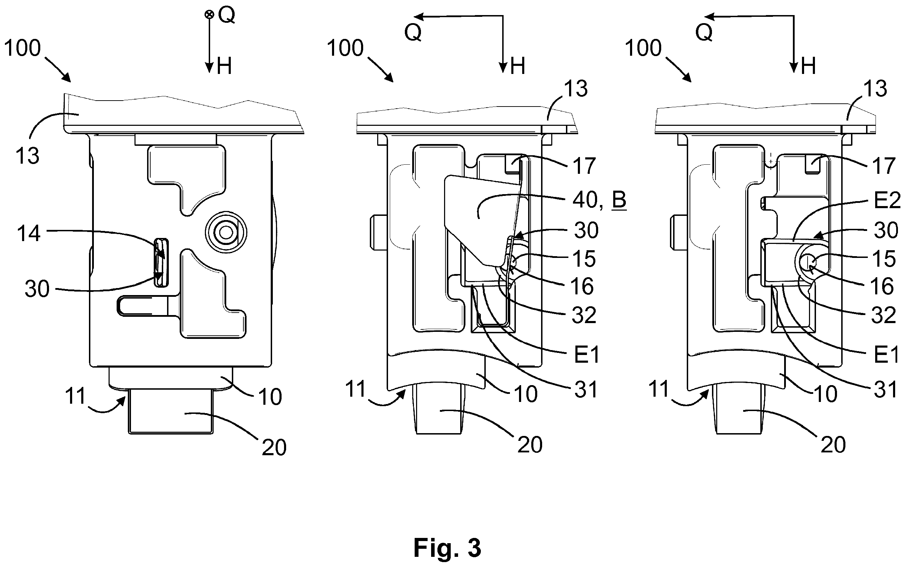

Wie die Figuren 1, 3 und im nachfolgenden die Figur 5 verdeutlichen, ist am Führungsgehäuse 10, genauer gesagt in der Montageöffnung 14, der Befestigungspin 15 für das Federelement 30 vorgesehen, über welchen der Befestigungsabschnitt 32 des Federelementes 30 bei der Montage des Federelementes 30 an der Sperrvorrichtung 100 geschoben wird. Dadurch kann das Federelement 30 einfach und präzise in einer Endmontagestellung E über dem Befestigungspin 15 positioniert und dadurch gleichzeitig, in nur einem Montageschritt bzw. in nur einer Montagebewegung zuverlässig am Führungsgehäuse 10 befestigt werden.

Um die Montage des Federelementes 30 noch weiter zu erleichtern, kann am Befestigungspin 15 eine abgeschrägte Montagefläche 16 ausgebildet sein, die dem Monteur eine haptische Rückmeldung über die Richtigkeit der Montage liefern kann. Eine abgeschrägte Montagefläche 16 reduziert außerdem den erforderlichen Kraftaufwand beim Montieren des Federelementes 30 an der Sperrvorrichtung 100. Zudem kann die Endmontagestellung E des Federelementes 30 nach dem Überführen des Federelementes 30 über den Befestigungspin 15 am Ende der Montagefläche 16 haptisch spürbar durch ein sprungartiges Einschnappen des Federelementes 30 signalisiert werden. Somit kann der Monteur die Endmontagestellung E des Federelementes 30 und das Ende der erfolgreich durchgeführten Montage auf eine intuitive Weise erkennen.

Die Figur 3 zeigt die erfindungsgemäße Sperrvorrichtung 100 von unterschiedlichen Seiten. Links in der Figur 3 ist die erfindungsgemäße Sperrvorrichtung 100 mit der Sicht auf die Montageöffnung 14 gezeigt. In der Mitte der Figur 3 ist die erfindungsgemäße Sperrvorrichtung 100 parallel zur Längserstreckungsrichtung der Montageöffnung 14 und mit dem eingesetzten Federelement 30 sowie dem eingesetzten separaten Aufbruchsschutzelement 40 gezeigt. Rechts der Figur 3 ist die erfindungsgemäße Sperrvorrichtung 100 ebenfalls parallel zur Längserstreckungsrichtung der Montageöffnung 14 und mit dem eingesetzten Federelement 30 gezeigt, jedoch ohne das separate Aufbruchsschutzelement 40.

Oberhalb des Führungsgehäuses 10 für den Sperrbolzen 20 ist ein Gehäusedeckel 13 vorgesehen, an welchem ein nicht dargestellter Schließzylinder zur Bewegung des Sperrbolzens 20 im Führungsgehäuse 10 angeordnet sein kann, welcher mit einem Schlüssel, vorzugsweise durch Drücken und/oder Drehen, betätigbar sein kann. Zwischen dem Führungsgehäuse 10 für den Sperrbolzen 20 und dem Gehäusedeckel 13 bildet sich eine Sollbruchstelle bzw. eine von außen zugängliche Stelle, die für unberechtigte Manipulationen von außen anfällig ist. Eine unberechtigte Person kann versuchen, den Gehäusedeckel 13 abzunehmen, um sich einen Zugang zum Sperrbolzen 20 in der Führungsaufnahme 11 des Führungsgehäuses 10 zu verschaffen. Bei geöffnetem Gehäusedeckel 13 ist der Sperrbolzen 20 unberechtigten Manipulationen ausgesetzt. Um dennoch ein Herausziehen des Sperrbolzens 20 aus der Führungsaufnahme 11 des Führungsgehäuses 10 und einen Diebstahl des Kraftfahrzeuges zu verhindern, dient das Aufbruchsschutzelement 40. Das Aufbruchsschutzelement 40 ist vorgespannt an einem Befestigungspin 17 am Gehäusedeckel 13 in einer Betriebsstellung B befestigt, in welcher das Aufbruchsschutzelement 40 eine Bewegung des Sperrbolzens 20 zulässt. Durch das Abnehmen des Gehäusedeckels 13 wird der Befestigungspin 17 hochgezogen, wodurch das Aufbruchsschutzelement 40 in seine Arretierungsstellung A federelastisch befördert wird, in welcher das Aufbruchsschutzelement 40 in eine der Arretiernuten 24 am Sperrbolzen 20 eingreifen und somit den Sperrbolzen 20 arretieren kann. Somit kann eine Sperrvorrichtung 100 bereitgestellt werden, die über eine hohe Sicherheit, einen verbesserten Komfort im Normalbetrieb sowie über eine hohe Aufbruchssicherheit in einem Notfallbetrieb des Kraftfahrzeuges verfügt. Die Arretierungsstellung A des Aufbruchsschutzelements 40 wird in der Figur 6a schematisch angedeutet.

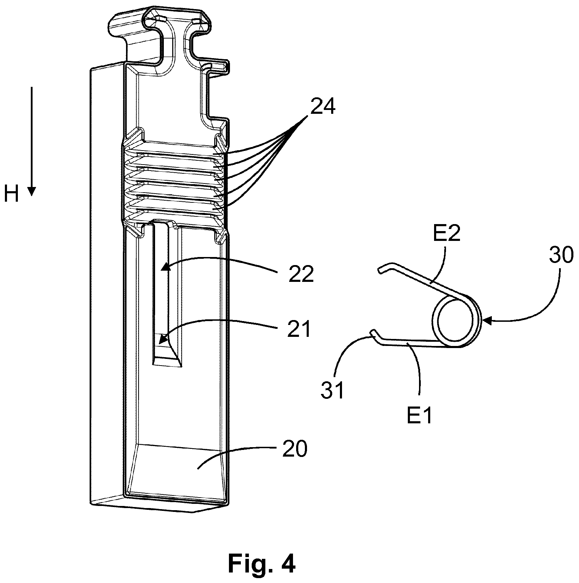

Die Figur 4 zeigt weiterhin eine perspektivische Ansicht auf den Sperrbolzen 20 und das Federelement 30 jeweils in der Alleinstellung. Am Sperrbolzen 20 ist die Nut 22 ausgebildet, die mit einem abgeschrägten Halteabschnitt 21 ausgebildet ist, an welchem der Kontaktabschnitt 31 des Federelementes 30 in der Entriegelungsposition EP des Sperrbolzens 20 zur Auflage kommt. Während einer Bewegung des Sperrbolzens 20 zwischen der Verriegelungsposition VP und der Entriegelungsposition EP oder zumindest zum Teil während einer solchen Bewegung des Sperrbolzens 20 ist der Kontaktabschnitt 31 des Federelementes 30 kontaktfrei zum Sperrbolzen 20 führbar, um einen Freilauf für den Kontaktabschnitt 31 zu ermöglichen und den Wechsel der Positionen EP, VP durch den Sperrbolzen 20 nicht zu beeinträchtigen. Spätestens in der Entriegelungsposition EP des Sperrbolzens 20 kann der federelastische Kontakt zwischen dem Federelement 30 und dem Sperrbolzen 20 hergestellt werden, um Klappergeräusche in der Sperrvorrichtung 100 während des Betriebes des Kraftfahrzeuges zu unterbinden.

Wie die Figur 5 ferner zeigt, kann das Federelement 30 ohne ein Aufbruchsschutzelement 40 verwendet werden, bspw. in den Sperrvorrichtungen 100, die keine Sollbruchstelle zwischen dem Führungsgehäuse 10 und dem Gehäusedeckel 13 aufweisen und/oder die nicht leicht aufzubrechen sind. Zusätzlich zum Befestigungspin 15 kann am Führungsgehäuse 10, vorzugsweise in der Montageöffnung 14 ein Anschlagpin 18 vorgesehen sein, um ein Überschlagen des Federelementes 30, insbesondere des ersten Schenkelendes E1 des Federelementes 30 zu verhindern.

Die Figuren 6a und 6b zeigen ein weiteres Ausführungsbeispiel der erfindungsgemäßen Sperrvorrichtung 100 bzw. des erfindungsgemäßen Federelementes 30 in einer perspektivischen Darstellung ohne das Führungsgehäuse 10 und in einer Schnittdarstellung. Das Federelement 30 ist dabei integral mit einem Aufbruchsschutzelement 40 ausgebildet. In der Figur 6a ist der Sperrbolzen 20 in der Verriegelungsposition VP und in der Figur 6b in der Entriegelungsposition EP dargestellt.

Das Federelement 30 kann vorgespannt zwischen dem Führungsgehäuse 10 für den Sperrbolzen 20 und einem Gehäusedeckel 13 an einem Befestigungspin 17 in einer Betriebsstellung B befestigt sein. In der Betriebsstellung B kann das Aufbruchsschutzelement 40 eine Bewegung des Sperrbolzens 20 zulassen, indem das Aufbruchsschutzelement 40 durch den Befestigungspin 17 auf Abstand von Arretiernuten 24 am Sperrbolzen 20 gehalten wird. Der Befestigungspin 17 ist dabei mit dem Gehäusedeckel 13 verbunden und wird durch ein Abnehmen des Gehäusedeckels 13 hochgeschoben, wodurch das Federelement 30 einfedern kann bzw. in eine Arretierungsstellung A (siehe gestrichelte Linie rechts in der Figur 6a) überführt werden kann, in welcher das Aufbruchsschutzelement 40 in die Arretiernuten 24 am Sperrbolzen 20 eingreifen und somit den Sperrbolzen 20 gegen ein unberechtigtes Herausziehen arretieren kann. Somit kann die Funktionalität des Federelementes 30 erweitert werden. Neben einer Abfang- und Dämpfungsfunktion der unangenehmen Klappergeräusche kann das Federelement 30 folglich eine weitere Funktion aufweisen und als ein Aufbruchsschutz dienen.

Dabei ist es denkbar, dass das Federelement 30 aus einem entsprechend ausgeformten und gebogenen Federstahl, bspw. Federblech, ausgebildet sein kann. Das Federelement 30 kann dabei mit einem ersten Schenkel S1, an welchem der Kontaktabschnitt 31 ausgebildet ist, und einem zweiten Schenkel S2 ausgeführt sein, an welchem der Befestigungsabschnitt 32 zum Befestigen des Federelementes 30 am Befestigungspin 17 und das Aufbruchsschutzelement 40 ausgebildet ist. Das Aufbruchsschutzelement 40 kann dabei als ein abgewinkeltes Stück des zweiten Schenkels S2 ausgebildet sein. Der Kontaktabschnitt 31 kann dabei ein zu einem Haken bzw. Dreieck abgewinkeltes Stück am Ende des ersten Schenkels 31 umfassen, das gegen eine Flachseite als Halteabschnitt 21 am Sperrbolzen 20 aufliegen kann. Ein solches Federelement 30 ist ebenfalls einfach und günstig in der Herstellung und kann vorteilhafte federelastische Eigenschaften bereitstellen. Somit kann ein verbessertes Federelement 30 mit erweiterten Funktionen bereitgestellt werden, welches zum Erzeugen der Haltekraft F zumindest in der Entriegelungsstellung EP des Sperrbolzens 30 und zum Erzeugen einer Arretierkraft bei einem Aufbruchsversuch der Sperrvorrichtung 100 ausgebildet sein kann.

Die Figur 7 zeigt eine weitere mögliche Ausführungsform der erfindungsgemäßen Sperrvorrichtung 100 bzw. des erfindungsgemäßen Federelementes 30. Das Federelement 30 umfasst dabei einen Kontaktabschnitt 31 in Form eines Druckstiftes, welcher mittels einer Druckfeder 33 in die Richtung Q quer zur Hubrichtung H des Sperrbolzens 20 mit der Haltekraft F beaufschlagt ist. Ein solches Federelement 30 ist ebenfalls einfach auszubilden und zu montieren. Hierzu müsste im Führungsgehäuse 10 lediglich eine Rundbohrung als eine Montageöffnung 14 ausgebildet werden, in welcher der Kontaktabschnitt 31 mit der Druckfeder 33 eingesetzt wird. Weiterhin ist es möglich, dass das Federelement 30 einen hülsenartigen Befestigungsabschnitt 32 für den Kontaktabschnitt 31 und die Druckfeder 33 aufweisen kann. Somit kann die Zusammensetzung des Federelementes 30 und die Handhabung des fertigen Federelementes 30 erleichtert werden. Dadurch kann außerdem die Montage des Federelementes 30 am Führungsgehäuse 10 vereinfacht werden.

Wie die Figuren 6a, 6b und 7 zeigen, ist zwischen der Nut 22 und dem Halteabschnitt 21 ein, vorzugsweise schräger, Rampenabschnitt 23 am Sperrbolzen 20 ausgebildet, um ein Überführen des Kontaktabschnittes 31 des Federelementes 30 aus der Nut 22 auf einen (flächigen) Halteabschnitt 21 des Sperrbolzens 20 zu unterstützen. Somit kann eine geräusch- und reibungsarme Kontaktierung zwischen dem Federelement 30, insbesondere dem Kontaktabschnitt 31 des Federelementes 30, und dem Sperrbolzen 20, insbesondere dem flächigen Halteabschnitt 21 des Sperrbolzens 20 in den Ausführungsbeispielen der Figuren 6a, 6b und 7, ermöglicht werden.

### Bezugszeichenliste

- 10: Führungsgehäuse
- 11: Führungsaufnahme
- 12: Führungswandung
- 13: Gehäusedeckel
- 14: Montageöffnung
- 15: Befestigungspin
- 16: Montagefläche
- 17: Befestigungspin für ein separates Aufbruchsschutzelement oder für ein Federelement mit einem integrierten Aufbruchsschutzelement
- 18: Anschlagpin
- 19: Stütze

- 20: Sperrbolzen
- 21: Halteabschnitt
- 22: Nut
- 23: Rampenabschnitt
- 24: Arretiernuten

- 30: Federelement
- 31: Kontaktabschnitt
- 32: Befestigungsabschnitt
- 33: Druckfeder

- 40: Aufbruchsschutzelement

- 100: Sperrvorrichtung
- 101: funktionswesentliches Bauteil

- A: Arretierungsstellung
- B: Betriebsstellung

- E: Endmontagestellung

- E1: erstes Schenkelende
- E2: zweites Schenkelende

- S1: erster Schenkel
- S2: zweiter Schenkel

- F: Haltekraft
- F^{H}: Komponente der Haltekraft in der Hubrichtung
- F^{Q}: Komponente der Haltekraft in der Querrichtung

- H: Hubrichtung
- Q: Querrichtung

- EP: Entriegelungsposition
- VP: Verriegelungsposition

## Patentansprüche

1. Sperrvorrichtung (100) zum Sperren eines funktionswesentlichen Bauteils (101) eines Kraftfahrzeugs, insbesondere einer Lenkspindel, mit
einem Führungsgehäuse (10), in welchem eine Führungsaufnahme (11) für einen Sperrbolzen (20) ausgebildet ist, in welcher der Sperrbolzen (20) beweglich entlang einer Hubrichtung (H) zwischen einer Verriegelungsposition (VP) zum Verriegeln des funktionswesentlichen Bauteils (101) und einer Entriegelungsposition (EP) zum Freigeben des funktionswesentlichen Bauteils (101) aufgenommen ist,
und einem Federelement (30) zum Einbringen einer Haltekraft (F) auf den Sperrbolzen (20) zumindest in einer Richtung (Q) quer zur Hubrichtung (H),
**dadurch gekennzeichnet,**
**dass** das Federelement (30) einen Kontaktabschnitt (31) aufweist, welcher in der Entriegelungsposition (EP) des Sperrbolzens (20) einen Halteabschnitt (21) des Sperrbolzens (20) federelastisch kontaktiert, wodurch das Federelement (30) die Haltekraft (F) über den Sperrbolzen (20) an einer Führungswandung (12) in der Führungsaufnahme (11) abstützt.

2. Sperrvorrichtung (100) nach Anspruch 1,
**dadurch gekennzeichnet,**
**dass** am Sperrbolzen (20) mindestens eine Nut (22) ausgebildet ist, in welcher der Kontaktabschnitt (31) des Federelementes (30) zumindest zum Teil während einer Bewegung des Sperrbolzens (20) zwischen der Verriegelungsposition (VP) und der Entriegelungsposition (EP) kontaktfrei zum Sperrbolzen (20) führbar ist,
wobei insbesondere zwischen der Nut (22) und dem Halteabschnitt (21) ein, vorzugsweise schräger, Rampenabschnitt (23) am Sperrbolzen (20) ausgebildet ist, um ein Überführen des Kontaktabschnittes (31) des Federelementes (30) aus der Nut (22) auf den Halteabschnitt (21) des Sperrbolzens (20) zu unterstützen.

3. Sperrvorrichtung (100) nach einem der vorhergehenden Ansprüche,
**dadurch gekennzeichnet,**
**dass** am Federelement (30) ein Aufbruchsschutzelement (40) ausgebildet ist, wobei das Federelement (30) zwischen dem Führungsgehäuse (10) für den Sperrbolzen (20) und einem Gehäusedeckel (13) vorgespannt in einer Betriebsstellung (B) befestigt ist,
in welcher das Aufbruchsschutzelement (40) eine Bewegung des Sperrbolzens (20) zulässt,
wobei vorzugsweise das Federelement (30) in eine Arretierungsstellung (A) überführbar ist, wenn der Gehäusedeckel (13) in seiner Anordnung zum Führungsgehäuse (10) verändert wird,
in welcher das Aufbruchsschutzelement (40) eine Bewegung des Sperrbolzens (20) verhindert,
wobei insbesondere am Gehäusedeckel (13) ein Schließzylinder zur Bewegung des Sperrbolzens (20) im Führungsgehäuse (10) angeordnet ist, welcher mit einem Schlüssel, vorzugsweise durch Drücken und/oder Drehen, betätigbar ist.

4. Sperrvorrichtung (100) nach einem der vorhergehenden Ansprüche,
**dadurch gekennzeichnet,**
**dass** das Federelement (30) aus einem, vorzugsweise gebogenen, Federstahl, insbesondere Federblech, ausgebildet ist,
wobei insbesondere das Federelement (30) einen ersten Schenkel (S1), an welchem der Kontaktabschnitt (31) ausgebildet ist, und einen zweiten Schenkel (S2) aufweist, an welchem ein Befestigungsabschnitt (32) zum Befestigen des Federelementes (30) am Führungsgehäuse (10) und insbesondere ein Aufbruchsschutzelement (40) ausgebildet ist.

5. Sperrvorrichtung (100) nach einem der vorhergehenden Ansprüche,
**dadurch gekennzeichnet,**
**dass** der Kontaktabschnitt (31) in Form eines Druckstiftes oder einer Druckkugel ausgebildet ist, welcher oder welche mittels einer Druckfeder (33) in die Richtung (Q) quer zur Hubrichtung (H) des Sperrbolzens (20) mit der Haltekraft (F) beaufschlagt ist, wobei insbesondere das Federelement (30) einen hülsenartigen Befestigungsabschnitt (32) für den Kontaktabschnitt (31) und die Druckfeder (33) aufweist.

6. Sperrvorrichtung (100) nach einem der vorhergehenden Ansprüche, **dadurch gekennzeichnet, dass** das Federelement (30) in Form einer Schenkelfeder ausgebildet ist, wobei vorzugsweise das Federelement (30), insbesondere die Schenkelfeder, ein erstes Schenkelende (E1), an welchem der Kontaktabschnitt (31) ausgebildet ist, und ein zweites Schenkelende (E2) aufweist, welches federelastisch am Führungsgehäuse (10), vorzugsweise an einer Stütze (19) im Führungsgehäuse (10), abgestützt ist, wobei insbesondere zwischen dem ersten Schenkelende (E1) und dem zweiten Schenkelende (E2) ein Befestigungsabschnitt (32) zum Befestigen des Federelementes (30) am Führungsgehäuse (10) ausgebildet ist,
wobei insbesondere das erste Schenkelende (E1) und das zweite Schenkelende (E2) symmetrisch, vorzugsweise spiegelsymmetrisch, zueinander ausgebildet sind, wobei vorzugsweise mindestens das erste Schenkelende (E1) des Federelementes (30) in Richtung zum zweiten Schenkelende (E2) abgewinkelt ist, um eine Haltekraft (F) auf den Sperrbolzen (20) in die Richtung (Q) quer zur Hubrichtung (H) und entlang der Hubrichtung (H) auszuüben.

7. Sperrvorrichtung (100) nach einem der vorhergehenden Ansprüche,
**dadurch gekennzeichnet,**
**dass** am Führungsgehäuse (10) eine Montageöffnung (14), bspw. in Form eines Montageschlitzes, für das Federelement (30) ausgebildet ist, die außerhalb der Führungsaufnahme (11) zugänglich ist,
wobei vorzugsweise am Führungsgehäuse (10), insbesondere in der Montageöffnung (14), ein Befestigungspin (15) für das Federelement (30), insbesondere für einen Befestigungsabschnitt (32) des Federelementes (30), ausgebildet ist, und/oder dass am Führungsgehäuse (10), insbesondere an einem Befestigungspin (15) des Führungsgehäuses (10), eine, vorzugsweise abgeschrägte, Montagefläche (16) ausgebildet ist, um die Montage des Federelementes (30) am Führungsgehäuse (10) zu erleichtern.

8. Federelement (30) für eine Sperrvorrichtung (100) zum Sperren eines funktionswesentlichen Bauteils (101) eines Kraftfahrzeugs, insbesondere einer Lenkspindel, insbesondere nach einem der vorhergehenden Ansprüche,
wobei die Sperrvorrichtung (100) ein Führungsgehäuse (10) aufweist, in welchem eine Führungsaufnahme (11) für einen Sperrbolzen (20) ausgebildet ist, in welcher der Sperrbolzen (20) beweglich entlang einer Hubrichtung (H) zwischen einer Verriegelungsposition (VP) zum Verriegeln des funktionswesentlichen Bauteils (101) und einer Entriegelungsposition (EP) zum Freigeben des funktionswesentlichen Bauteils (101) aufgenommen ist,
wobei das Federelement (30) zum Einbringen einer Haltekraft (F) auf den Sperrbolzen (20) zumindest in einer Richtung (Q) quer zur Hubrichtung (H) ausgebildet ist,
**dadurch gekennzeichnet,**
**dass** das Federelement (30) einen Kontaktabschnitt (31), welcher in der Entriegelungsposition (EP) des Sperrbolzens (20) an einem Halteabschnitt (21) des Sperrbolzens (20) federelastisch zur Auflage bringbar ist, wodurch das Federelement (30) die Haltekraft (F) über den Sperrbolzen (20) an einer Führungswandung (12) in der Führungsaufnahme (11) abstützen kann,
und einen Befestigungsabschnitt (32) aufweist, welcher zum Befestigen des Federelementes (30) am Führungsgehäuse (10) ausgebildet ist.

9. Federelement (30) nach Anspruch 8,
**dadurch gekennzeichnet,**
**dass** am Federelement (30) ein Aufbruchsschutzelement (40) ausgebildet ist, wobei das Federelement (30) zwischen dem Führungsgehäuse (10) für den Sperrbolzen (20) und einem Gehäusedeckel (13) in einer Betriebsstellung (B) befestigbar ist,
in welcher das Aufbruchsschutzelement (40) eine Bewegung des Sperrbolzens (20) zulässt,
wobei insbesondere das Federelement (30) in eine Arretierungsstellung (A) überführbar ist, wenn der Gehäusedeckel (13) in seiner Anordnung zum Führungsgehäuse (10) verändert wird,
in welcher das Aufbruchsschutzelement (40) eine Bewegung des Sperrbolzens (20) verhindert.

10. Federelement (30) nach Anspruch 8 oder 9,
**dadurch gekennzeichnet,**
**dass** das Federelement (30) aus einem, vorzugsweise gebogenen, Federstahl, insbesondere Federblech, ausgebildet ist,
wobei insbesondere das Federelement (30) einen ersten Schenkel (S1), an welchem der Kontaktabschnitt (31) ausgebildet ist, und einen zweiten Schenkel (S2) aufweist, an welchem der Befestigungsabschnitt (32) und insbesondere das Aufbruchsschutzelement (40) ausgebildet ist.

11. Federelement (30) nach einem der vorhergehenden Ansprüche 8 bis 10,
**dadurch gekennzeichnet,**
**dass** der Kontaktabschnitt (31) in Form eines Druckstiftes oder einer Druckkugel ausgebildet ist, welcher oder welche mittels einer Druckfeder (33) in die Richtung (Q) quer zur Hubrichtung (H) des Sperrbolzens (20) mit der Haltekraft (F) beaufschlagt ist, wobei insbesondere das Federelement (30) einen hülsenartigen Befestigungsabschnitt (32) für den Kontaktabschnitt (31) und die Druckfeder (33) aufweist.

12. Federelement (30) nach einem der vorhergehenden Ansprüche 8 bis 11,
**dadurch gekennzeichnet,**
**dass** das Federelement (30) in Form einer Schenkelfeder ausgebildet ist,
wobei das Federelement (30), insbesondere die Schenkelfeder, vorzugsweise ein erstes Schenkelende (E1), an welchem der Kontaktabschnitt (31) ausgebildet ist, und ein zweites Schenkelende (E2) aufweist, welches federelastisch am Führungsgehäuse (10), vorzugsweise an einer Stütze (19) im Führungsgehäuse (10), abstützbar ist,
wobei insbesondere der Befestigungsabschnitt (32) zwischen dem ersten Schenkelende (E1) und dem zweiten Schenkelende (E2) ausgebildet ist.

13. Federelement (30) nach Anspruch 12,
**dadurch gekennzeichnet,**
**dass** das erste Schenkelende (E1) und das zweite Schenkelende (E2) symmetrisch, vorzugsweise spiegelsymmetrisch, zueinander ausgebildet sind,
wobei vorzugsweise mindestens das erste Schenkelende (E1) des Federelementes (30) insbesondere in Richtung zum zweiten Schenkelende (E2) abgewinkelt ist, um eine Haltekraft (F) auf den Sperrbolzen (20) in die Richtung (Q) quer zur Hubrichtung (H) und entlang der Hubrichtung (H) auszuüben.

14. Verfahren zum Montieren eines Federelementes (30) an einer Sperrvorrichtung (100) zum Sperren eines funktionswesentlichen Bauteils (101) eines Kraftfahrzeugs, insbesondere einer Lenkspindel, insbesondere nach einem der vorhergehenden Ansprüche,
wobei die Sperrvorrichtung (100) ein Führungsgehäuse (10), in welchem eine Führungsaufnahme (11) für einen Sperrbolzen (20) ausgebildet ist, in welcher der Sperrbolzen (20) beweglich entlang einer Hubrichtung (H) zwischen einer Verriegelungsposition (VP) zum Verriegeln des funktionswesentlichen Bauteils (101) und einer Entriegelungsposition (EP) zum Freigeben des funktionswesentlichen Bauteils (101) aufgenommen ist,
und ein Federelement (30) zum Einbringen einer Haltekraft (F) auf den Sperrbolzen (20) zumindest in einer Richtung (Q) quer zur Hubrichtung (H) aufweist,
**dadurch gekennzeichnet,**
**dass** das Führungsgehäuse (10) eine Montageöffnung (14) zum Einsetzen des Federelementes (30) aufweist, die außerhalb der Führungsaufnahme (11) zugänglich ist, wobei während eines Montagevorganges das Federelement (30) in die Montageöffnung (14) eingeschoben wird, bis das Federelement (30) über einen Befestigungspin (15) in der Montageöffnung (14) greift, wodurch das Federelement (30) eine Endmontagestellung (E) erreicht.

15. Verfahren nach Anspruch 14,
**dadurch gekennzeichnet,**
**dass** beim Überführen des Federelementes (30) über den Befestigungspin (15) das Federelement (30) entlang einer, vorzugsweise abgeschrägten, Montagefläche (16) geführt wird, die am Befestigungspin (15) ausgebildet ist.

## Claims

1. Locking device (100) for locking a functionally essential component (101) of a motor vehicle, in particular a steering spindle, comprising
a guide housing (10) in which a guide receptacle (11) for a locking bolt (20) is formed, in which the locking bolt (20) is received movably along a stroke direction (H) between an interlocking position (VP) for interlocking the functionally essential component (101) and an unlocking position (EP) for releasing the functionally essential component (101),
and a spring element (30) for applying a holding force (F) to the locking bolt (20) at least in a direction (Q) transverse to the stroke direction (H),
**characterized in that**
the spring element (30) comprises a contact section (31) which, in the unlocking position (EP) of the locking bolt (20), makes resilient contact with a holding section (21) of the locking bolt (20), as a result of which the spring element (30) supports the holding force (F) via the locking bolt (20) on a guide wall (12) in the guide receptacle (11).

2. Locking device (100) according to claim 1, **characterized in that** at least one groove (22) is formed on the locking bolt (20), in which the contact section (31) of the spring element (30) can be guided at least partially without contact to the locking bolt (20) during a movement of the locking bolt (20) between the interlocking position (VP) and the unlocking position (EP), wherein in particular between the groove (22) and the holding section (21) a, preferably inclined, ramp section (23) is formed on the locking bolt (20) in order to support a transfer of the contact section (31) of the spring element (30) from the groove (22) to the holding section (21) of the locking bolt (20).

3. Locking device (100) according to any one of the preceding claims,
**characterized in that**
a break-open protection element (40) is formed on the spring element (30), wherein the spring element (30) is fixed in a pre-tensioned manner in an operating position (B) between the guide housing (10) for the locking bolt (20) and a housing cover (13),
in which the break-open protection element (40) permits a movement of the locking bolt (20),
wherein preferably the spring element (30) is transferable into a stopping position (A) when the housing cover (13) is changed in its arrangement relative to the guide housing (10), in which the break-open protection element (40) prevents a movement of the locking bolt (20),
wherein in particular a locking cylinder for moving the locking bolt (20) in the guide housing (10) is arranged on the housing cover (13), which locking cylinder can be actuated with a key, preferably by pressing and/or turning.

4. Locking device (100) according to any one of the preceding claims,
**characterized in that**
the spring element (30) is formed from a, preferably bent, spring steel, in particular spring sheet,
wherein in particular the spring element (30) comprises a first leg (S1), on which the contact section (31) is formed, and a second leg (S2), on which a fixing section (32) for fixing the spring element (30) to the guide housing (10) and in particular a break-open protection element (40) is formed.

5. Locking device (100) according to any one of the preceding claims,
**characterized in that**
the contact section (31) is designed in the form of a pressure pin or a pressure ball, which is acted upon by the holding force (F) by means of a compression spring (33) in the direction (Q) transverse to the stroke direction (H) of the locking bolt (20),
wherein in particular the spring element (30) comprises a sleeve-like fixing section (32) for the contact section (31) and the compression spring (33).

6. Locking device (100) according to one of the preceding claims, **characterized in that** the spring element (30) is designed in the form of a leg spring, wherein preferably the spring element (30), in particular the leg spring, comprises a first leg end (E1), at which the contact section (31) is formed, and a second leg end (E2), which is supported resiliently on the guide housing (10), preferably on a support (19) in the guide housing (10), wherein in particular between the first leg end (E1) and the second leg end (E2) a fixing section (32) is formed for fixing the spring element (30) to the guide housing (10), wherein in particular the first leg end (E1) and the second leg end (E2) are formed symmetrically, preferably mirror-symmetrically, with respect to one another, wherein preferably at least the first leg end (E1) of the spring element (30) is angled in the direction of the second leg end (E2) in order to exert a holding force (F) on the locking bolt (20) in the direction (Q) transverse to the stroke direction (H) and along the stroke direction (H).

7. Locking device (100) according to any one of the preceding claims,
**characterized in that**
a mounting opening (14), for example in the form of a mounting slot, for the spring element (30) is formed on the guide housing (10) and is accessible outside the guide receptacle (11),
wherein preferably a fixing pin (15) for the spring element (30), in particular for a fixing section (32) of the spring element (30), is formed on the guide housing (10), in particular in the mounting opening (14), and/or **in that** a mounting surface (16), preferably beveled, is formed on the guide housing (10), in particular on a fixing pin (15) of the guide housing (10), in order to facilitate the mounting of the spring element (30) on the guide housing (10).

8. Spring element (30) for a locking device (100) for locking a functionally essential component (101) of a motor vehicle, in particular a steering spindle, in particular according to one of the preceding claims,
wherein the locking device (100) comprises a guide housing (10) in which a guide receptacle (11) for a locking bolt (20) is formed, in which the locking bolt (20) is received movably along a stroke direction (H) between an interlocking position (VP) for interlocking the functionally essential component (101) and an unlocking position (EP) for releasing the functionally essential component (101),
wherein the spring element (30) is designed for applying a holding force (F) to the locking bolt (20) at least in a direction (Q) transverse to the stroke direction (H),
**characterized in that**
the spring element (30) comprises a contact section (31) which, in the unlocking position (EP) of the locking bolt (20), makes resilient contact with a holding section (21) of the locking bolt (20), as a result of which the spring element (30) supports the holding force (F) via the locking bolt (20) on a guide wall (12) in the guide receptacle (11),
and a fixing section (32) which is formed for fixing the spring element (30) to the guide housing (10).

9. Spring element (30) according to claim 8,
**characterized in that**
a break-open protection element (40) is formed on the spring element (30), wherein the spring element (30) can be fixed in an operating position (B) between the guide housing (10) for the locking bolt (20) and a housing cover (13),
in which the break-open protection element (40) permits a movement of the locking bolt (20),
wherein in particular the spring element (30) is transferable into a stopping position (A) when the housing cover (13) is changed in its arrangement relative to the guide housing (10),
in which the break-open protection element (40) prevents a movement of the locking bolt (20).

10. Spring element (30) according to claim 8 or 9,
**characterized in that**
the spring element (30) is formed from a, preferably bent, spring steel, in particular spring sheet,
wherein in particular the spring element (30) comprises a first leg (S1), on which the contact section (31) is formed, and a second leg (S2), on which the fixing section (32) and in particular a break-open protection element (40) is formed.

11. Spring element (30) according to any one of the preceding claims 8 to 10,
**characterized in that**
the contact section (31) is designed in the form of a pressure pin or a pressure ball, which is acted upon by the holding force (F) by means of a compression spring (33) in the direction (Q) transverse to the stroke direction (H) of the locking bolt (20),
wherein in particular the spring element (30) comprises a sleeve-like fixing section (32) for the contact section (31) and the compression spring (33).

12. A spring element (30) according to any one of the preceding claims 8 to 11,
**characterized in that**
the spring element (30) is designed in the form of a leg spring,
wherein preferably the spring element (30), in particular the leg spring, comprises a first leg end (E1), at which the contact section (31) is formed, and a second leg end (E2), which can be supported resiliently on the guide housing (10), preferably on a support (19) in the guide housing (10),
wherein in particular the fixing section (32) is formed between the first leg end (E1) and the second leg end (E2).

13. Spring element (30) according to claim 12,
**characterized in that**
the first leg end (E1) and the second leg end (E2) are formed symmetrically, preferably mirror-symmetrically, with respect to one another,
wherein preferably at least the first leg end (E1) of the spring element (30) is angled in particular in the direction of the second leg end (E2) in order to exert a holding force (F) on the locking bolt (20) in the direction (Q) transverse to the stroke direction (H) and along the stroke direction (H).

14. Method for mounting a spring element (30) on a locking device (100) for locking a functionally essential component (101) of a motor vehicle, in particular a steering spindle, in particular according to one of the preceding claims,
wherein the locking device (100) comprises a guide housing (10) in which a guide receptacle (11) for a locking bolt (20) is formed, in which the locking bolt (20) is received movably along a stroke direction (H) between an interlocking position (VP) for interlocking the functionally essential component (101) and an unlocking position (EP) for releasing the functionally essential component (101),
and a spring element (30) for applying a holding force (F) to the locking bolt (20) at least in a direction (Q) transverse to the stroke direction (H),
**characterized in that**
the guide housing (10) comprises a mounting opening (14) for inserting the spring element (30) which is accessible outside the guide receptacle (11),
wherein during a mounting process, the spring element (30) is pushed into the mounting opening (14) until the spring element (30) engages in the mounting opening (14) via a fixing pin (15), whereby the spring element (30) reaches a final mounting position (E).

15. Method according to claim 14,
**characterized in that**
during the transfer of the spring element (30) over the fixing pin (15), the spring element (30) is guided along a, preferably beveled, mounting surface (16) formed on the fixing pin (15).

## Revendications

1. Dispositif de fermeture (100) pour fermer un composant fonctionnellement essentiel (101) d'un véhicule automobile, en particulier un arbre de direction, comprenant un boitier de guidage (10) dans lequel est formé un logement de guidage (11) pour un boulon de verrouillage (20), dans lequel le boulon de verrouillage (20) est reçu de manière mobile le long d'une direction de course (H) entre une position de verrouillage (VP) pour verrouiller le composant fonctionnellement essentiel (101) et une position de déverrouillage (EP) pour libérer le composant fonctionnellement essentiel (101),
et un élément de ressort (30) pour appliquer une force de maintien (F) sur le boulon de verrouillage (20) au moins dans une direction (Q) transversale à la direction de course (H), **caractérisé en ce que**
l'élément de ressort (30) présente une section de contact (31) qui, dans la position de déverrouillage (EP) du boulon de verrouillage (20), s'applique élastiquement contre une section de maintien (21) du boulon de verrouillage (20), de sorte que l'élément de ressort (30) soutient la force de maintien (F) par le boulon de verrouillage (20) sur une paroi de guidage (12) dans le logement de guidage (11).

2. Dispositif de fermeture (100) selon la revendication 1, **caractérisé en ce qu'**au moins une rainure (22) est formée sur le boulon de verrouillage (20), dans laquelle la section de contact (31) de l'élément de ressort (30) peut être guidée, au moins partiellement, sans contact avec le boulon de verrouillage (20) lors d'un mouvement du boulon de verrouillage (20) entre la position de verrouillage (VP) et la position de déverrouillage (EP), dans lequel, en particulier entre la rainure (22) et la section de maintien (21), une section de rampe (23), de préférence inclinée, est formée sur le boulon de verrouillage (20) afin de favoriser un transfert de la section de contact (31) de l'élément de ressort (30) de la rainure (22) à la section de maintien (21) du boulon de verrouillage (20).

3. Dispositif de fermeture (100) selon l'une des revendications précédentes,
**caractérisé en ce qu'**
un élément de protection contre la rupture (40) est formé sur l'élément de ressort (30), l'élément de ressort (30) étant fixé de manière précontrainte dans une position de fonctionnement (B) entre le boitier de guidage (10) pour le boulon de verrouillage (20) et un couvercle de boitier (13),
dans lequel l'élément de protection contre la rupture (40) permet le mouvement du boulon de verrouillage (20),
dans lequel, de préférence, l'élément de ressort (30) est transférable dans une position de blocage (A) lorsque le couvercle du boitier (13) est modifié dans sa disposition par rapport au boitier de guidage (10),
dans lequel l'élément de protection contre la rupture (40) empêche le mouvement du boulon de verrouillage (20),
dans lequel un cylindre de fermeture pour le déplacement du boulon de verrouillage (20) dans le boitier de guidage (10) est disposé en particulier sur le couvercle du boitier (13), lequel cylindre de fermeture peut être actionné avec une clé, de préférence par pression et/ou rotation.

4. Dispositif de fermeture (100) selon l'une des revendications précédentes,
**caractérisé en ce que**
l'élément de ressort (30) est formé d'un acier à ressort, de préférence plié, en particulier d'une tôle à ressort,
l'élément de ressort (30) présentant en particulier une première branche (S1), sur laquelle est formée la section de contact (31), et une deuxième branche (S2), sur laquelle est formée une section de fixation (32) pour la fixation de l'élément de ressort (30) au boitier de guidage (10) et en particulier un élément de protection contre la rupture (40).

5. Dispositif de fermeture (100) selon l'une des revendications précédentes,
**caractérisé en ce que**
la section de contact (31) est réalisée sous la forme d'une tige de pression ou d'une bille de pression qui est soumise à la force de maintien (F) au moyen d'un ressort de compression (33) dans la direction (Q) transversale à la direction de course (H) du boulon de verrouillage (20),
dans lequel, en particulier, l'élément de ressort (30) comprend une section de fixation (32) en forme de douille pour la section de contact (31) et le ressort de compression (33).

6. Dispositif de fermeture (100) selon l'une des revendications précédentes, **caractérisé en ce que** l'élément de ressort (30) est réalisé sous la forme d'un ressort à branches, l'élément de ressort (30), en particulier le ressort à branches, présentant de préférence une première extrémité de branche (E1), sur laquelle est formée la section de contact (31), et une deuxième extrémité de branche (E2), qui s'appuie de manière élastique sur le boitier de guidage (10), de préférence sur un support (19) dans le boitier de guidage (10), dans lequel, en particulier entre la première extrémité de branche (E1) et la deuxième extrémité de branche (E2), une section de fixation (32) est formée pour la fixation de l'élément de ressort (30) sur le boitier de guidage (10), dans lequel, en particulier, la première extrémité de branche (E1) et la deuxième extrémité de branche (E2) sont réalisées symétriquement, de préférence en miroir, l'une par rapport à l'autre, dans lequel au moins la première extrémité de branche (E1) de l'élément de ressort (30) étant de préférence coudée en direction de la deuxième extrémité de branche (E2) afin d'exercer une force de maintien (F) sur le boulon de verrouillage (20) dans la direction (Q) transversale à la direction de course (H) et le long de la direction de course (H).

7. Dispositif de fermeture (100) selon l'une des revendications précédentes,
**caractérisé en ce qu'**
une ouverture de montage (14), par exemple sous la forme d'une fente de montage, pour l'élément de ressort (30) est formée sur le boitier de guidage (10) et est accessible à l'extérieur du réceptacle de guidage (11),
dans lequel une broche de fixation (15) pour l'élément de ressort (30), en particulier pour une section de fixation (32) de l'élément de ressort (30), est formée de préférence sur le boitier de guidage (10), en particulier dans l'ouverture de montage (14), et/ou **en ce qu'**une surface de montage (16), de préférence biseautée, est formée sur le boitier de guidage (10), en particulier sur une broche de fixation (15) du boitier de guidage (10), afin de faciliter le montage de l'élément de ressort (30) sur le boitier de guidage (10).

8. Elément de ressort (30) pour un dispositif de fermeture (100) pour fermer un composant fonctionnellement essentiel (101) d'un véhicule automobile, en particulier un arbre de direction, en particulier selon l'une des revendications précédentes,
dans lequel le dispositif de fermeture (100) présente un boitier de guidage (10) dans lequel est formé un logement de guidage (11) pour un boulon de verrouillage (20), dans lequel le boulon de verrouillage (20) est reçu de manière mobile le long d'une direction de course (H) entre une position de verrouillage (VP) pour verrouiller le composant fonctionnellement essentiel (101) et une position de déverrouillage (EP) pour libérer le composant fonctionnellement essentiel (101),
dans lequel l'élément de ressort (30) est conçu pour appliquer une force de maintien (F) sur le boulon de verrouillage (20) au moins dans une direction (Q) transversale à la direction de course (H),
**caractérisé en ce que**
l'élément de ressort (30) présente une section de contact (31) qui, dans la position de déverrouillage (EP) du boulon de verrouillage (20), s'applique élastiquement contre une section de maintien (21) du boulon de verrouillage (20), de sorte que l'élément de ressort (30) soutient la force de maintien (F) par le boulon de verrouillage (20) sur une paroi de guidage (12) dans le logement de guidage (11),
et une section de fixation (32) adaptée pour fixer l'élément de ressort (30) au boitier de guidage (10).

9. Élément de ressort (30) selon la revendication 8,
**caractérisé en ce qu'**
un élément de protection contre la rupture (40) est formé sur l'élément de ressort (30), l'élément de ressort (30) peut être fixé dans une position de fonctionnement (B) entre le boitier de guidage (10) pour le boulon de verrouillage (20) et un couvercle de boitier (13), dans lequel l'élément de protection contre la rupture (40) permet le mouvement du boulon de verrouillage (20),
dans lequel, de préférence, l'élément de ressort (30) est transférable dans une position de blocage (A) lorsque le couvercle du boitier (13) est modifié dans sa disposition par rapport au boitier de guidage (10),
dans lequel l'élément de protection contre la rupture (40) empêche le mouvement du boulon de verrouillage (20).

10. Élément de ressort (30) selon la revendication 8 ou 9,
**caractérisé en ce que**
l'élément de ressort (30) est formé d'un acier à ressort, de préférence plié, en particulier d'une tôle à ressort,
l'élément de ressort (30) présentant en particulier une première branche (S1), sur laquelle est formée la section de contact (31), et une deuxième branche (S2), sur laquelle est formée une section de fixation (32) et en particulier un élément de protection contre la rupture (40).

11. Élément de ressort (30) selon l'une des revendications précédentes 8 à 10,
**caractérisé en ce que**
la section de contact (31) est réalisée sous la forme d'une tige de pression ou d'une bille de pression qui est soumise à la force de maintien (F) au moyen d'un ressort de compression (33) dans la direction (Q) transversale à la direction de course (H) du boulon de verrouillage (20),
dans lequel, en particulier, l'élément de ressort (30) comprend une section de fixation (32) en forme de douille pour la section de contact (31) et le ressort de compression (33).

12. Élément de ressort (30) selon l'une des revendications précédentes 8 à 11,
**caractérisé en ce que**
l'élément de ressort (30) est sous la forme d'un ressort à branches,
l'élément de ressort (30), en particulier le ressort à branches, présentant de préférence une première extrémité de branche (E1), sur laquelle est formée la section de contact (31), et une deuxième extrémité de branche (E2), qui peut s'appuyer de manière élastique sur le boitier de guidage (10), de préférence sur un support (19) dans le boitier de guidage (10),
dans lequel en particulier la section de fixation (32) est formée entre la première extrémité de branche (E1) et la deuxième extrémité de branche (E2).

13. Élément de ressort (30) selon la revendication 12,
**caractérisé en ce que**
la première extrémité de branche (E1) et la deuxième extrémité de branche (E2) sont réalisées symétriquement, de préférence en miroir, l'une par rapport à l'autre, dans lequel au moins la première extrémité de branche (E1) de l'élément de ressort (30) étant de préférence coudée en direction de la deuxième extrémité de branche (E2) afin d'exercer une force de maintien (F) sur le boulon de verrouillage (20) dans la direction (Q) transversale à la direction de course (H) et le long de la direction de course (H).

14. Procédé de montage d'un élément de ressort (30) sur un dispositif de fermeture (100) pour fermer un composant fonctionnellement essentiel (101) d'un véhicule automobile, en particulier un arbre de direction, en particulier selon l'une des revendications précédentes, dans lequel le dispositif de fermeture (100) présente un boitier de guidage (10) dans lequel est formé un logement de guidage (11) pour un boulon de verrouillage (20), dans lequel le boulon de verrouillage (20) est reçu de manière mobile le long d'une direction de course (H) entre une position de verrouillage (VP) pour verrouiller le composant fonctionnellement essentiel (101) et une position de déverrouillage (EP) pour libérer le composant fonctionnellement essentiel (101),
et un élément de ressort (30) pour appliquer une force de maintien (F) sur le boulon de verrouillage (20) au moins dans une direction (Q) transversale à la direction de course (H), **caractérisé en ce que**
le boitier de guidage (10) présente une ouverture de montage (14) pour l'insertion de l'élément de ressort (30), qui est accessible à l'extérieur du réceptacle de guidage (11), dans lequel, pendant une opération de montage, l'élément de ressort (30) est poussé dans l'ouverture de montage (14) jusqu'à ce que l'élément de ressort (30) s'engage sur une broche de fixation (15) dans l'ouverture de montage (14), ce qui permet à l'élément de ressort (30) d'atteindre une position de montage finale (E).

15. Procédé selon la revendication 14,
**caractérisé en ce que**
lorsque l'élément de ressort (30) est transféré sur la broche de fixation (15), l'élément de ressort (30) est guidé le long d'une surface de montage (16), de préférence biseautée, qui est formée sur la broche de fixation (15).
